# EUROPEAN PATENT SPECIFICATION

(11) **EP 3 637 536 B1**
(45) Date of publication and mention of the grant of the patent: **08.12.2021**
(21) Application number: 18200160.2
(22) Date of filing: 12.10.2018
(51) Int. Cl.: H01M 10/613, H01M 10/6568, H01M 10/625, H01M 10/6556, F16L 3/26

(54) **COUPLING MEMBER FOR A BATTERY PACK OF A VEHICLE**
KUPPLUNGSELEMENT FÜR EIN BATTERIEPAKET EINES FAHRZEUGS
ÉLÉMENT DE COUPLAGE POUR UN BLOC-BATTERIE D'UN VÉHICULE

(43) Date of publication of application: 15.04.2020
(73) Proprietor: Samsung SDI Co., Ltd., Gyeonggi-do 17084 (KR)
(72) Inventor: Masaryk, Carl-Michael, 8010 Graz (AT); Pucher, Matthias, 8052 Graz (AT); Bernhard, Thomas, 8045 Graz (AT)
(74) Representative: Gulde & Partner

(56) References cited:
- GB-A- 1 511 306
- JP-A- 2012 180 876
- US-A1- 2011 212 355
- US-A1- 2018 241 102

## Description

### Field of the Invention

The present invention relates to a battery pack for a vehicle including a coupling member for components of the cooling circuits.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differs from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of battery modules. They may be configured in a series, parallel or a mixture of both to deliver the desired voltage, capacity, or power density. Components of battery packs include the individual battery modules, and the interconnects, which provide electrical conductivity between them. A battery management system (BMS) is provided for managing the battery pack, such as by protecting the battery from operating outside its safe operating area, monitoring its state, calculating secondary data, reporting that data, controlling its environment, authenticating it and/or balancing it.

The mechanical integration of such a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules can be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction. Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Cell cooling for effectively emitting/discharging/dissipating heat from the cells is required. Thus, high voltage traction battery systems almost always include a thermal condition system in order to fulfill lifetime and performance requirements.

Therefore, the thermal management system may include a liquid cooling circuit. In general, the liquid cooling circuit may include several components, like cooling plates being in thermal contact with the battery modules, pipes or hoses for forwarding the liquid coolant, and coolant interfaces for connecting the pipes or hoses with the cooling plates, respectively a vehicles cooling circuit. Assembling the single parts of a conventionally cooling system generally requires several steps which often need to be done manually.

Examples of battery modules having a cooling system are presented in for e.g. the following patent documents: US2018/241102 A1, JP2012180876 A and US2011/212355 A1.

The present invention specifically deals about the process of assembling a fluid connection between the cooling plates and the coolant interfaces. More particularly, the cooling plates are generally made of a metal material, whereas the coolant interfaces are made of plastics. One important aspect of said specific assembly process is to ensure tightness of the coupling during daily operation. Another issue is to ensure mechanical fixing of the coolant interface at the cooling plate.

In the state of art, a plastic coolant interface may include a coupling element, which is inserted into a cooling port at the cooling plate. The coupling elements may for example bear a sealing ring for establishing tightness of the connection. The plastic coolant interface may further include a mechanical fixing, which is configured to interact with a corresponding fixing structure at the cooling plate. In the state of art, this kind of mechanical connection is generally realized by a screw connection or latching elements. However, due to the increased number of parts, the assembling process is more complex and automatization more difficult. Furthermore, metal inserts are required at the plastic coolant interface for mounting the screw connection. Finally, tolerance is critical for ensuring tightness of the connection which may be deteriorated due to the addition mechanical fixation element at the coolant interface.

It is thus an object of the present invention to overcome or reduce at least some of the drawbacks of the prior art and to provide a battery system, where the assembly effort is low and tightness as well as mechanical fixing during daily operation is ensured. In particular, is important to establish a cooling circuitry that stays tight under all environmental and working conditions and can be assembled very easily.

### Summary of Invention

One or more of the drawbacks of the prior art are avoided or at least reduced by means of the present invention, particularly by the subject-matter of the appended independent claim.

The present invention provides a novel battery pack for a vehicle. The battery pack comprises:
- a battery module including a plurality of secondary battery cells,
- a carrier plate with a top surface configured for supporting the battery module, wherein the carrier plate includes an integral cooling channel structure, the integral cooling channel structure having at least one opening at a side wall of the carrier plate,
- a liquid cooling circuit being in thermal contact with the battery module, wherein the integral cooling channel structure is part of the cooling circuit and further includes a coolant distributer configured for tightly connection to the integral cooling channel structure at the opening, and
- a coupling member, wherein the coupling member and the side wall of the carrier plate include a pair of corresponding coupling elements configured for establishing a mechanical connection between the coupling member and the carrier plate, and wherein the coupling member further includes mounting brackets for attachment of the coolant distributor.

According to the present invention, the battery pack includes a separate coupling member for connecting the coolant distributor with the cooling channels of the carrier plate. One aspect of the present invention is to separate the mechanical connection of the coolant circuit elements to the carrier plate of battery modules and the fluidly connection of the cooling distributor and the cooling channel being embedded in the carrier plate. Thus, a coupling member is designed in a way to ensure an easy and durable mechanical attachment to the cell carrier plate and, in addition, an easy and safe fluidly connection of the coolant circuit components, i.e. the coolant distributor and the cooling channels of the carrier plate.

For mechanical attachment, the coupling member and the side wall of the carrier plate include a pair of corresponding coupling elements. The skilled person in the art may consider conventional coupling elements being designed in such a way that a friction-type connection or a force-type connection is established between the carrier plate and the coupling member. The coupling member may include one, two or more coupling elements and the carrier plate will thus have the corresponding number of coupling elements positioned such that when the coupling member is attached a durable mechanical connection is ensured. The coupling elements of the coupling member assure the mechanical fixation of the coolant distributor to the carrier plate and thereby simplify the assembly process of both components. No additional fixation means, like for example screws, are needed. The robust and durable fixation may handle mechanical loads, specifically vibration, safely.

Furthermore, the coupling member includes mounting brackets for attachment of the coolant distributor. These mounting brackets are designed to hold the coolant distributor in place, when the fluid connection to the cooling channels embedded in the carrier plate is established. No additional fixation means, like for example screws, are needed for mounting the coolant distributor. The attachment is durable and robust and can resist mechanical loads in various directions.

According to a particularly preferred embodiment, the coupling member includes a support plate and the mounting brackets are arranged on one side of the support plate and the coupling elements are arranged on the opposite side thereof. In other words, the mounting brackets are positioned on the upper surface of a support plate to be easily accessible for the fixing of the coolant distributor. The coupling elements are positioned on the same support plate, but on the opposite lower surface which will fit closely to the side wall of the carrier circuit. Preferably, the support plate, when fixed to the carrier plate, covers the side wall of the carrier plate and the support plate then includes a passage being arranged above the opening of the integral cooling channel structure. The part of the coolant distributor which shall establish the fluid connection will be inserted into the opening of the cooling channel structure of the carrier plate through the passage. The passage may include secure elements against twisting so as to ensure tightness of the fluid connection in daily use.

According to another embodiment, the coupling elements for fixing the coupling member to the carrier plate are self-locking clamp elements. Thereby no additional fixation means, like screws etc. are needed.

According to another preferred embodiment, the mounting brackets for attachment of the coolant distributor and the passage of the support plate are arranged in the same section of the support plate. Hence, the coolant distributor will be fixed at the part, which is designed to establish the fluid connection with the interior cooling structure of the carrier plate. This will further improve the safety of the fluid connection.

Further, the coolant distributor may preferably include a tubular portion extending in a first direction and at least one intersection portion extending perpendicular to the tubular portion. The intersection portion is configured for establishing fluid connection with the opening of the integral cooling channel structure of the carrier plate. The mounting brackets include a clip element that, when closed, encircles and fixes the tubular portion. According to this embodiment, the coolant distributor is formed as a tube which bears at its circumferential wall the intersection portions. The mounting brackets are designed to encompass the circumferential wall.

The clip element may preferably include a first half shell and a second half shell, wherein the first half shell is firmly attached to the support plate and the second half shell is moveable attached to one side of the first half shell for opening and closing the clip element. In other words, one of the half shells is attached to the support plate and the other half shell is moveable coupled to the fixed half shell. When the coolant distributor is inserted into the coupling member, the hinged half shell is closed. Thereby, attachment of the coolant distributor is simplified and open for automatization. The first and second half shells together fully encompass the circumference of the coolant distributor, but need not necessarily have the same dimension. For example, the first half shell may extend only over a part of the circumference of the coolant distributor which is smaller than the part of the circumference of the coolant distributor, which is covered by the second half shell.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: schematic view on a vehicle including a battery pack;
- Fig. 2: illustrates a perspective view of a conventional battery module;
- Fig. 3: illustrates schematically the process of assembling a fluid connection of the battery pack's cooling circuit to a carrier plate including an integral cooling channel structure; and
- Figs. 4: through 6 illustrate another embodiment of a coupling member according to the present invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

Herein, the terms "upper" and "lower" are defined according to the z-axis. For example, the upper side is positioned at the upper part of the z-axis, whereas the lower side is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

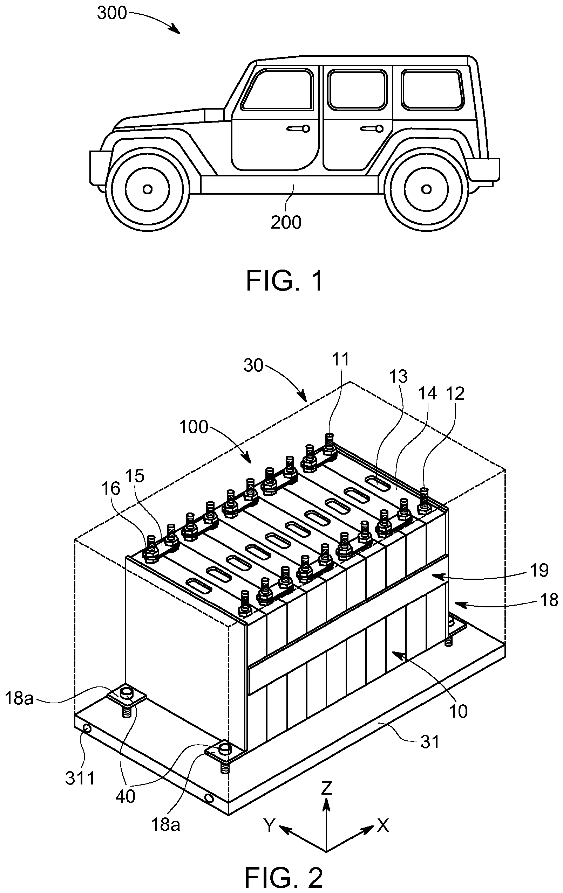

Battery packs of electric or hybrid vehicles demand huge space and are therefore usually positioned at the lower side of the vehicle bodies. In particular, the battery pack may be fixed to a floor of a vehicle carrying structure. Battery packs according to the prior art, despite any modular structure, usually comprise a battery housing that serves as enclosure to seal the battery pack against the environment and provides structural protection of the battery pack's components. Housed battery packs are usually mounted as a whole into their application environment, e.g. an electric vehicle. In alternative, the battery pack may be configured for being structurally integrated in the vehicle carrying structure and may comprise attachment means that are configured to be connected to the vehicle body for structural integration. In other words, the vehicle body part may comprise the battery system carrier and may be directly integrated into the vehicle body instead of being mounted or attached to the vehicle body. The present invention could be realized in any of the before mentioned variants. Figure 1 illustrates in a schematically way a vehicle 300 including a battery pack 200 mounted to the ground of a carrying structure of the vehicle 300.

Referring to Fig. 2, an exemplary embodiment of a battery module 100 includes a plurality of battery cells 10 aligned in one direction and a heat exchange member (not shown) provided adjacent to a bottom surface of the plurality of battery cells 10. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a carrier plate 31 by bolts 40. Thus, a top surface of the carrier plate 31 is configured for supporting the battery module 100. The carrier plate 31 may be part of a module housing 30.

Here, each battery cell 10 is a prismatic (or rectangular) cell, the wide flat surfaces of the cells being stacked together to form the battery module. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15, and the bus bar 15 may be fixed by a nut 16 or the like. Hence, the battery module 100 may be used as power source unit by electrically connecting the plurality of battery cells 10 as one bundle. The battery pack 10 may include a plurality of battery modules 100.

Generally, the battery cells 10 generate a large amount of heat while being charged/discharged. The generated heat is accumulated in the battery cells 10, thereby accelerating the deterioration of the battery cells 10. Therefore, the carrier plate 31 of the battery module 100 further includes an integral cooling channel structure having two inlet openings 311 at a side wall of the carrier plate 31. The integral cooling channel structure is provided adjacent to the bottom surface of the battery cells 10 so as to cool down the battery cells 10. The integral cooling channel structure includes a hollow profile comprising coolant channels that are fluidly connecting the inlet openings 311 and outlet openings (not shown) at an opposite side wall of the carrier plate 31. The hollow profile may have various cross-sectional shapes, such as e.g. a circular or a rectangular cross-sectional shape. Preferably, the hollow profile is an extruded aluminum profile. Such lightweight extruded profiles can be manufactured easily and cost-effectively.

The integral cooling channel structure is part of a liquid cooling circuit of the battery pack 10. The liquid circuit may include several other components besides the carrier plates 31 with the integral cooling channel structure, such as pumps, pipes or hoses for forwarding the liquid coolant, and coolant distributors or interfaces for connecting the pipes or hoses with the carrier plates 31, respectively a vehicles cooling circuit.

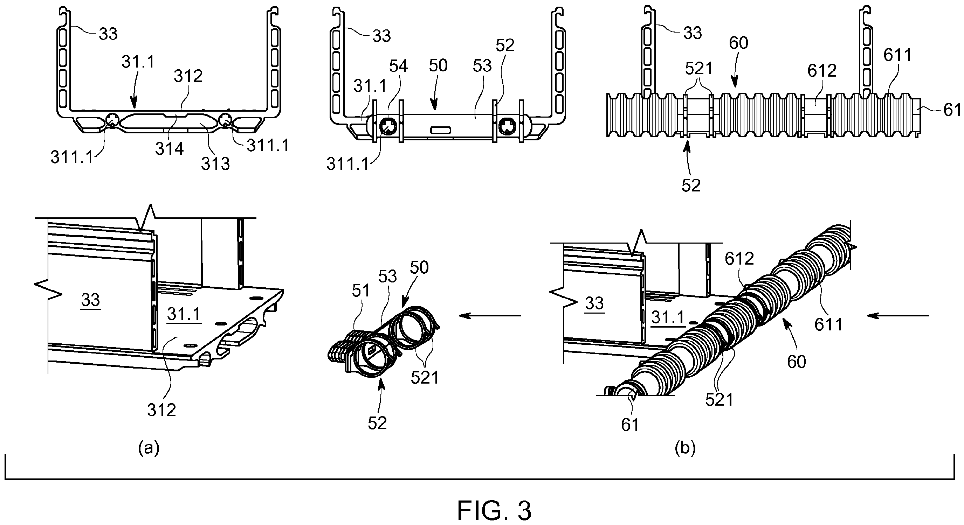

The present invention specifically deals about the process of assembling a fluid connection to the carrier plates. Figure 3, schematically illustrates the process which could be subdivided into two steps (a) and (b).

In step (a), which is illustrated in the outermost left two drawings and the upper central drawing, a carrier plate 31.1 is provided, which forms together with two side plates 33 a housing for a battery module (not shown). The upper drawings of step (a) are top views and the lower drawing a perspective view on one of the longitudinal ends of the housing. The side plates 33 and the carrier plate 31.1 may be made of extruded aluminum. The battery cells of the battery module will be placed on the top surface 312 of the carrier plate 31.1. On the underside of the carrier plate 31.1, two inlet openings 311.1 are provided left and right to a centrally placed junction area 313. The inlet openings 311.1 are in fluid connection with the integral cooling channel structure of the carrier plate 31.1. At the opposite end of the housing, corresponding outlet openings will be provided at the carrier plate 31.1.

In step (a), a coupling member 50 is attached to the side wall of the carrier plate 31.1. The coupling member 50 may be made of plastics, but not limited thereto. The coupling member 50 further includes a coupling element 51, which corresponds to a coupling element 314 positioned in the junction area 313 of the side wall of the carrier plate 31.1. The corresponding coupling elements 51, 314 are configured for establishing a mechanical connection between the coupling member 50 and the carrier plate 31.1. Here, the coupling element 51 of the coupling member 50 is formed as a tube-like extension having a rippled surface structure. The coupling element 314 at the carrier plate 31.1 is a beat portion and will snap into the rippled surface structure of the coupling element 51, when the coupling member 50 is pouched into the junction area 313.

The coupling member 50 further includes mounting brackets 52 for attachment of a coolant distributor 60. Here, the coupling member 50 includes a support plate 53 and the mounting brackets 52 are arranged on one side of the support plate 53 and the coupling elements 51 are arranged on the opposite side thereof. The support plate 53, when fixed to the carrier plate 31.1, will cover the side wall of the carrier plate 31.1 as illustrated in the upper central drawing of Figure 3.

The support plate 53 further includes two passages 54 being arranged above the openings 311.1 of the integral cooling channel structure. According to the exemplary embodiment illustrated in Figure 3, the mounting brackets 52 for attachment of the coolant distributor 60 and the passages 54 of the support plate 53 are arranged in the same section of the support plate 53. Specifically, the mounting brackets 52 include a pair of clip elements 521 that, when closed, encircle and fix a tubular portion 61 of the coolant distributor 60. When the coupling member 50 is attached to the carrier plate 31.1, the pair of clip elements 521 will be positioned closely left and right to the passage 54.

In step (b) of the process, which is illustrated in the two outermost right drawings, the coolant distributor 60 is snapped onto the coupling member 50. The coolant distributor 60 includes the tubular portion 61 extending in parallel to the longitudinal direction of the side wall of the carrier plate 31.1. The tubular portion 61 comprises bulge sections 611 to compensate production tolerances and damp vibration. The tubular portion 61 further comprises flat sections 612 where the clip elements 521 encircle the tubular portion 61. Furthermore, an intersection portion (not shown) extending perpendicular to the tubular portion 61 is provided at the flat sections 612. The intersection portion is configured for establishing fluid connection with the inlet opening 311.1 of the integral cooling channel structure of the carrier plate 31.1.

Generally, the intersection portion will have the contour of a hose attachment and include sealing means like sealing rings. Thus, when the intersection portion of the coolant distributor 60 is inserted fully through the passage 54 of the support plate 53 into the inlet opening 311.1, tightly fluid connection will be established. The coolant distributor 60 will then be fixed to the coupling member 50 via the clips 521.

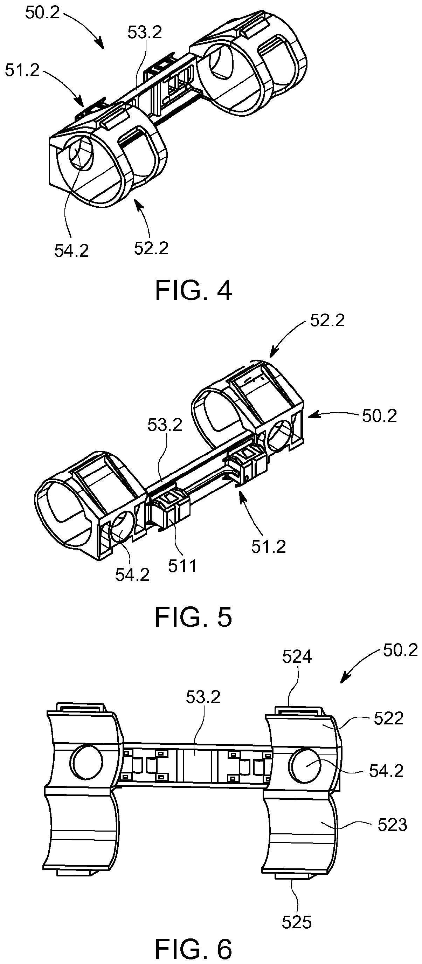

Figures 4 and 5 illustrate a front and back view of another embodiment of the coupling member 50.2 according to the present invention. In Fig. 6, the coupling member 50.2 is illustrated with open mounting brackets 52.2. The coupling member 50.2 is useful for coupling the coolant distributor 60 in the same manner as the coupling member 50 of Figure 3 as far as the respective carrier plate will include corresponding coupling elements for the coupling elements 51.2. The coupling member 50.2 still includes a support plate 53.2 and the coupling elements 51.2 are positioned at the backside thereof whereas the mounting brackets 52.2 are positioned at the front side. The passages 54.2 will be positioned above the inlet openings at the side wall of the carrier plate when mounted.

According to the exemplary embodiment, the mounting brackets 52.2 are clip elements and include a first half shell 522 and a second half shell 523 (see Figure 6). The first half shell 522 is firmly attached to the support plate 53.2 and the second half shell 523 is moveable attached to one side of the first half shell 522 for opening and closing the clip element. The free sides of the first half shell 522 respectively second half shell 523 bear locking elements 524, 525 which snap together when the mounting bracket 52.2 is closed.

According to the exemplary embodiment, the coupling elements 51.2 for fixing the coupling member 50.2 to the carrier plate are configured as self-locking clamp elements. Here, the coupling elements 51.2 include a metal spring 511 which will snap into a corresponding recess at the carrier plate when the coupling member 50.2 is attached.

## Claims

1. A battery pack (200) for a vehicle (300), comprising:
- a battery module (100) including a plurality of secondary battery cells (10),
- a carrier plate (31) with a top surface (312) configured for supporting the battery module (100), wherein the carrier plate (31) includes an integral cooling channel structure, the integral cooling channel structure having at least one opening (311) at a side wall of the carrier plate (31),
- a liquid cooling circuit being in thermal contact with the battery module (100), wherein the integral cooling channel structure is part of the cooling circuit and the liquid cooling circuit further includes a coolant distributer (60) configured for tightly connection to the integral cooling channel structure at the opening (311), and
- a coupling member (50), wherein the coupling member (50) and the side wall of the carrier plate (31) include a pair of corresponding coupling elements (51) configured for establishing a mechanical connection between the coupling member (50) and the carrier plate (31), and wherein the coupling member (50) further includes mounting brackets (52) for attachment of the coolant distributor (60).

2. The battery pack of claim 1, wherein the coupling member (50) includes a support plate (53) and the mounting brackets (52) are arranged on one side of the support plate (53) and the coupling elements (51) are arranged on the opposite side thereof.

3. The battery pack of claim 2, wherein the support plate (53), when fixed to the carrier plate (31), covers the side wall of the carrier plate (31) and wherein the support plate (53) includes a passage (54) being arranged above the opening (311) of the integral cooling channel structure.

4. The battery pack of claim 3, wherein the mounting brackets (52) for attachment of the coolant distributor (60) and the passage (54) of the support plate (53) are arranged in the same section of the support plate (53).

5. The battery pack of any one of the preceding claims, wherein the coolant distributor (60) includes a tubular portion (61) extending in a first direction and at least one intersection portion extending perpendicular to the tubular portion (61), the intersection portion being configured for establishing fluid connection with the opening (311) of the integral cooling channel structure of the carrier plate (31); and
wherein the mounting brackets (52) include a clip element that, when closed, encircles and fixes the tubular portion (61).

6. The battery pack of claim 5, wherein the clip element includes a first half shell (522) and a second half shell (523), the first half shell (522) being firmly attached to the support plate (53) and the second half shell (523) being moveable attached to one side of the first half shell (522) for opening and closing the clip element.

7. The battery pack of any one of the preceding claims, wherein the coupling elements (51) for fixing the coupling member (50) to the carrier plate (31) are self-locking clamp elements.

## Patentansprüche

1. Ein Batteriepack (200) für ein Fahrzeug (300), aufweisend:
- ein Batteriemodul (100), das eine Vielzahl von Sekundärbatteriezellen (10) aufweist,
- eine Trägerplatte (31) mit einer Oberseite (312), die zum Stützen des Batteriemoduls (100) konfiguriert ist, wobei die Trägerplatte (31) eine integrale Kühlkanalstruktur aufweist, wobei die integrale Kühlkanalstruktur zumindest eine Öffnung (311) an einer Seitenwand der Trägerplatte (31) aufweist,
- einen Flüssigkeitskühlkreislauf, der mit dem Batteriemodul (100) in thermischem Kontakt steht, wobei die integrale Kühlkanalstruktur Teil des Kühlkreislaufs ist und der Flüssigkeitskühlkreislauf ferner einen Kühlmittelverteiler (60) aufweist, der konfiguriert ist, um mit der integralen Kühlkanalstruktur an der Öffnung (311) dicht verbunden zu werden, und
- ein Kupplungselement (50), wobei das Kupplungselement (50) und die Seitenwand der Trägerplatte (31) ein Paar entsprechender Kupplungselemente (51) aufweisen, die konfiguriert sind, um zwischen dem Kupplungselement (50) und der Trägerplatte (31) eine mechanische Verbindung herzustellen, und wobei das Kupplungselement (50) ferner Befestigungsklammern (52) zur Befestigung des Kühlmittelverteilers (60) aufweist.

2. Das Batteriepack nach Anspruch 1, wobei das Kupplungselement (50) eine Stützplatte (53) aufweist und die Befestigungsklammern (52) auf einer Seite der Stützplatte (53) angeordnet sind und die Kupplungselemente (51) auf der gegenüberliegenden Seite davon angeordnet sind.

3. Das Batteriepack nach Anspruch 2, wobei die Stützplatte (53), wenn sie an der Trägerplatte (31) befestigt ist, die Seitenwand der Trägerplatte (31) bedeckt, und wobei die Stützplatte (53) einen Durchlass (54) aufweist, der über der Öffnung (311) der integralen Kühlkanalstruktur angeordnet ist.

4. Das Batteriepack nach Anspruch 3, wobei die Befestigungsklammern (52) zur Befestigung des Kühlmittelverteilers (60) und der Durchlass (54) der Stützplatte (53) im selben Abschnitt der Stützplatte (53) angeordnet sind.

5. Das Batteriepack nach einem der vorhergehenden Ansprüche, wobei der Kühlmittelverteiler (60) einen Rohrabschnitt (61), der sich in eine erste Richtung erstreckt, und zumindest einen Kreuzungsabschnitt, der sich perpendikulär zum Rohrabschnitt (61) erstreckt, aufweist, wobei der Kreuzungsabschnitt konfiguriert ist, um eine Fluidverbindung mit der Öffnung (311) der integralen Kühlkanalstruktur der Trägerplatte (31) herzustellen; und wobei die Befestigungsklammern (52) ein Clipelement aufweisen, das den Rohrabschnitt (61) umgibt und befestigt, wenn es geschlossen ist.

6. Das Batteriepack nach Anspruch 5, wobei das Clipelement eine erste Halbschale (522) und eine zweite Halbschale (523) aufweist, wobei die erste Halbschale (522) an der Stützplatte (53) fest befestigt ist und die zweite Halbschale (523) an einer Seite der ersten Halbschale (522) bewegbar befestigt ist, um das Clipelement zu öffnen und zu schließen.

7. Das Batteriepack nach einem der vorhergehenden Ansprüche, wobei die Kupplungselemente (51) zum Befestigen des Kupplungselements (50) an der Trägerplatte (31) selbstverriegelnde Klammerelemente sind.

## Revendications

1. Bloc-batterie (200) pour un véhicule (300), comprenant :
- un module de batterie (100) comprenant une pluralité d'éléments de batterie secondaires (10),
- une plaque porteuse (31) avec une surface supérieure (312) configurée pour supporter le module de batterie (100), où la plaque porteuse (31) comprend une structure de canal de refroidissement solidaire, la structure de canal de refroidissement solidaire ayant au moins une ouverture (311) au niveau d'une paroi latérale de la plaque porteuse (31),
- un circuit de refroidissement de liquide qui est en contact thermique avec le module de batterie (100), où la structure de canal de refroidissement solidaire fait partie du circuit de refroidissement et le circuit de refroidissement de liquide comprend en outre un distributeur de réfrigérant (60) configuré pour un raccordement étanche à la structure de canal de refroidissement solidaire au niveau de l'ouverture (311), et
- un organe de couplage (50), où l'organe de couplage (50) et la paroi latérale de la plaque porteuse (31) comprennent une paire d'éléments de couplage (51) correspondants configurés pour établir un raccordement mécanique entre l'organe de couplage (50) et la plaque porteuse (31), et où l'organe de couplage (50) comprend en outre des consoles de montage (52) pour la fixation du distributeur de réfrigérant (60).

2. Bloc-batterie selon la revendication 1, dans lequel l'organe de couplage (50) comprend une plaque de support (53) et les consoles de montage (52) sont agencées sur un côté de la plaque de support (53) et les éléments de couplage (51) sont agencés sur son côté opposé.

3. Bloc-batterie selon la revendication 2, dans lequel la plaque de support (53), lorsqu'elle est fixée sur la plaque porteuse (31), recouvre la paroi latérale de la plaque porteuse (31) et dans lequel la plaque de support (53) comprend un passage (54) qui est agencé au-dessus de l'ouverture (311) de la structure de canal de refroidissement solidaire.

4. Bloc-batterie selon la revendication 3, dans lequel les consoles de montage (52) pour la fixation du distributeur de réfrigérant (60) et le passage (54) de la plaque de support (53) sont agencées dans la même section de la plaque de support (53).

5. Bloc-batterie selon l'une quelconque des revendications précédentes, dans lequel le distributeur de réfrigérant (60) comprend une partie tubulaire (61) s'étendant dans une première direction et au moins une partie d'intersection s'étendant perpendiculairement à la partie tubulaire (61), la partie d'intersection étant configurée pour établir le raccordement de fluide avec l'ouverture (311) de la structure de canal de refroidissement solidaire de la plaque porteuse (31) ; et
dans lequel les consoles de montage (52) comprennent un élément d'attache qui, lorsqu'il est fermé, encercle et fixe la partie tubulaire (61).

6. Bloc-batterie selon la revendication 5, dans lequel l'élément d'attache comprend une première demi-coque (522) et une seconde demi-coque (523), la première demi-coque (522) étant fermement fixée à la plaque de support (53) et la seconde demi-coque (523) étant fixée de manière mobile à un côté de la première demi-coque (522) pour ouvrir et fermer l'élément d'attache.

7. Bloc-batterie selon l'une quelconque des revendications précédentes, dans lequel les éléments de couplage (51) pour fixer l'organe de couplage (50) à la plaque porteuse (31) sont des éléments de serrage à verrouillage automatique.
